(19)

**Europäisches Patentamt**

**European Patent Office**

**Office européen des brevets**

(11) **EP 3 979 196 B1**

(12) **EUROPEAN PATENT SPECIFICATION**

(45) Date of publication and mention of the grant of the patent:
**06.05.2026 Bulletin 2026/19**

(21) Application number: **20844715.1**

(22) Date of filing: **23.07.2020**

(51) International Patent Classification (IPC):
**G06T 7/12** $^{(2017.01)}$ **G06T 7/136** $^{(2017.01)}$
**G06T 7/168** $^{(2017.01)}$ **G06T 7/181** $^{(2017.01)}$

(52) Cooperative Patent Classification (CPC):
**G06T 7/12; G06T 7/136; G06T 7/168; G06T 7/181;**
G06T 2207/10024; G06T 2207/30256;
G06T 2207/30261

(86) International application number:
**PCT/CN2020/103849**

(87) International publication number:
**WO 2021/013227 (28.01.2021 Gazette 2021/04)**

(54) **IMAGE PROCESSING METHOD AND APPARATUS FOR TARGET DETECTION**

BILDVERARBEITUNGSVERFAHREN UND -VORRICHTUNG ZUR ZIELERKENNUNG

PROCÉDÉ ET APPAREIL DE TRAITEMENT D'IMAGE POUR LA DÉTECTION DE CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2019 CN 201910677235**

(43) Date of publication of application:
**06.04.2022 Bulletin 2022/14**

(73) Proprietor: **Great Wall Motor Company Limited Baoding, Hebei 071000 (CN)**

(72) Inventor: **MIYAHARA, Shunji Baoding, Hebei 071000 (CN)**

(74) Representative: **dompatent Partnerschaft von Patentanwälten und Rechtsanwälten mbB Deichmannhaus am Dom Bahnhofsvorplatz 1 50667 Köln (DE)**

(56) References cited:
EP-A1- 3 800 575          CN-A- 105 139 391
CN-A- 105 320 940          CN-A- 106 203 398
CN-A- 109 389 024          CN-A- 109 389 024

CN-A- 109 902 806          CN-A- 109 993 046
CN-A- 109 993 046          JP-A- H07 200 997
US-A1- 2005 273 260          US-A1- 2020 372 264

- YONG HUANG ET AL: "Real-time traffic cone detection for autonomous vehicle", 2015 34TH CHINESE CONTROL CONFERENCE (CCC), TECHNICAL COMMITTEE ON CONTROL THEORY, CHINESE ASSOCIATION OF AUTOMATION, 28 July 2015 (2015-07-28), pages 3718 - 3722, XP033201805, DOI: 10.1109/ CHICC.2015.7260215
- ANONYMOUS: "How to update y = m x + b with new data - Analytica", 30 January 2019 (2019-01-30), XP055931445, Retrieved from the Internet <URL:https://analytica.com/ how-to-update-y-m-x-b-with-new-data/> [retrieved on 20220615]
- YONG HUANG; JIANRU XUE: "Real-time traffic cone detection for autonomous vehicle", 2015 34TH CHINESE CONTROL CONFERENCE (CCC), TECHNICAL COMMITTEE ON CONTROL THEORY, CHINESE ASSOCIATION OF AUTOMATION, 28 July 2015 (2015-07-28), pages 3718 - 3722, XP033201805, DOI: 10.1109/ ChiCC.2015.7260215

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 979 196 B1

## Description

## Technical Field

The present invention relates to the technical field of intelligent transportation and image processing, in particular to an image processing method and apparatus for target detection.

## Background Art

At present, vehicles with an autonomous driving (AD) function or advanced driver assistance system (ADAS) have begun to be gradually introduced to the market, which has greatly promoted the development of intelligent transportation.

In the prior art, sensors supporting the AD/ADAS mainly include a radar, a vision camera system (hereinafter also referred to as a camera), a laser radar, an ultrasonic sensor, etc., among which the vision camera system is the most widely used because it can obtain the same two-dimensional image information as human vision, and its typical applications include lane detection, object detection, vehicle detection, pedestrian detection, cyclist detection and other designated target detection. After the camera captures an image, processing such as edge extraction is performed on the image to extract object and environmental information in the captured image.

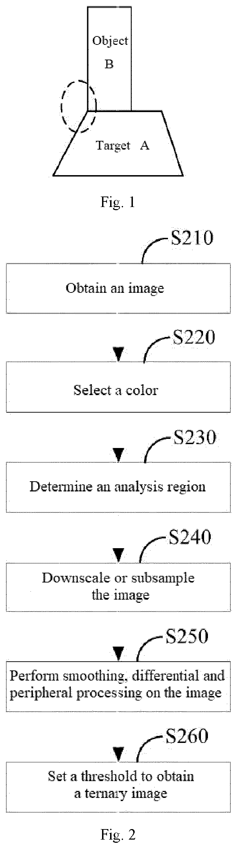

However, when the camera is used for target detection, due to limitation of performance of the current camera, the camera is very sensitive to an edge connection between a target and an unwanted object in the background, and detection errors are often caused by the edge connection or overlap between the object and the target. As shown in Fig. 1, a target A is a small target (such as a traffic cone) that needs to be detected, an object B is an object that does not need to be detected in the background, but edges of the target A and the object B are connected or overlapped (for example, the part circled by the dotted line), and the two may be very close in chroma, so it is difficult to distinguish the target A from the object B in the image captured by the camera, resulting in inaccurate recognition of the target A. In addition, in target detection, the target A or the object B is also likely to be a self-shadowing object, such as the sun, and correspondingly, the edge of the object B or the target A may disappear in the shadow, thereby further exacerbating the difficulty to separate the edge of the target A from the edge of the object B.

In the prior art, there is a solution for distinguishing an object from a target by using content of the object as well as external textures, colors, etc., but the solution is very complicated and obviously not suitable for objects and targets having similar features such as textures and colors. Therefore, there is currently no effective method to separate the edge between the target and the undesired object in the image. YONG HUANG ET AL: "Real-time traffic cone detection for autonomous vehicle", 34TH CHINESE CONTROL CONFERENCE (CCC), TECHNICAL COMMITTEE ON CONTROL THEORY, CHINESE ASSOCIATION OF AUTOMATION, 28 July 2015, pages 3718-3722, DOI: 10.1109/CHICC.2015.7260215, teaches an edge-based approach for traffic cone detection including line fitting.

## Summary of the Invention

In view of this, the present invention aims to provide an image processing method for target detection, so as to at least partially solve the technical problems.

In order to achieve the objective, the technical solution of the present invention is implemented as set out in the appended claims. Roughly speaking: an image processing method for target detection includes:

determining an analysis region, capable of covering a target, in an image captured by a camera on a vehicle, and preprocessing the image in the analysis region to obtain an edge point set for the target;
performing, if there is an edge point connection or overlap between a peripheral edge line of the target and a peripheral edge line of an object other than the target in the same edge point set, the following edge point separation processing: selecting edge points from the edge point set to form a first class and a second class respectively, wherein the first class includes edge points formed as a primary set, the second class includes edge points other than the primary set in the edge point set, and a height of the edge points in the primary set in the image is less than a height of the target; performing linear regression processing on the edge points in the primary set to obtain a corresponding linear regression line; selecting an edge point from the second class one by one, and calculating a deviation of the selected edge point with respect to the linear regression line; adding, if the deviation is less than a preset standard deviation, the selected edge point to the primary set; and repeating above processing until the deviation is greater than or equal to the preset standard deviation, so as to form a final primary set; and
creating the target on the basis of the edge points in the final primary set for target detection. Further, the selecting the edge points from the edge point set to form the first class includes: selecting, starting from a bottom position of the edge point set, edge points until reach a set height position sequentially in an order of increasing in height to form the first class, wherein the selected edge points need to meet a condition that an initial height is less than the height of the target. Further, an initial height of the edge points in the first class in the image is two thirds of the height of the target.

Further, the selecting the edge point from the second class one by one includes: selecting, starting from an edge point at a lowest height position in the second class, the edge point one by one for deviation calculation.

Further, the image processing method further includes: forming edge points that are not selected and edge points with deviations greater than or equal to the preset standard deviation in the second class as a secondary set; and discarding the secondary set.

Compared with the prior art, the image processing method for target detection of the present invention has the following advantages: the method of the embodiment of the present invention successfully separates a connected or overlapped edge set in the image taken by the vehicle camera, and realizes more accurate target detection.

Another objective of the present invention is to provide an image processing apparatus for target detection, so as to at least partially solve the technical problems.

In order to achieve the objective, the technical solution of the present invention is implemented as follows:

An image processing apparatus for target detection includes:

an image preprocessing module, configured to determine an analysis region, capable of covering a target, in an image captured by a camera on a vehicle, and preprocess the image in the analysis region to obtain an edge point set for the target;

an edge point separation module, configured to perform, if there is an edge point connection or overlap between a peripheral edge line of the target and a peripheral edge line of an object other than the target in the same edge point set, the following edge point separation processing: selecting edge points from the edge point set to form a first class and a second class respectively, wherein the first class includes edge points formed as a primary set, the second class includes edge points other than the primary set in the edge point set, and a height of the edge points in the primary set in the image is less than a height of the target; performing linear regression processing on the edge points in the primary set to obtain a corresponding linear regression line; selecting an edge point from the second class one by one, and calculating a deviation of the selected edge point with respect to the linear regression line; adding, if the deviation is less than a preset standard deviation, the selected edge point to the primary set; and repeating above processing until the deviation is greater than or equal to the preset standard deviation, so as to form a final primary set; and

a target creating module, configured to create the target on the basis of the edge points in the final primary set for target detection.

Further, the selecting, by the edge point separation module, the edge points from the edge point set to form the first class includes: selecting, starting from a bottom position of the edge point set, edge points until reach a set height position sequentially in an order of increasing in height to form the first class, wherein the selected edge points need to meet a condition that an initial height is less than the height of the target.

Further, an initial height of the edge points in the first class in the image is two thirds of the height of the target.

Further, the selecting, by the edge point separation module, the edge point from the second class one by one includes: selecting, starting from an edge point at a lowest height position in the second class, the edge point one by one for deviation calculation.

Further, the edge point separation module is further configured to: form edge points that are not selected and edge points with deviations greater than or equal to the preset standard deviation in the second class as a secondary set; and discard the secondary set.

The image processing apparatus has the same advantages as the above image processing method with respect to the prior art, which will not be repeated here.

Another objective of the present invention is to provide a machine-readable storage medium and a processor, so as to at least partially solve the technical problems.

In order to achieve the above objective, the technical solution of the present invention is implemented as follows:

A machine-readable storage medium has instructions stored thereon. The instructions are configured to make a machine execute the above image processing method for target detection.

A processor is configured to execute the instructions stored in the machine-readable storage medium.

The machine-readable storage medium and the processor have the same advantages as the above image processing method with respect to the prior art, which will not be repeated here.

Other features and advantages of the present invention will be described in detail in the following specific implementations.

**Brief Description of the Drawings**

The accompanying drawings constituting a part of the present invention are used to provide a further understanding of the present invention, and the illustrative implementations of the present invention and descriptions thereof are used to explain the present invention, and do not constitute improper limitation of the present invention. In the accompanying drawings:

Fig. 1 is a schematic diagram of an edge connection or overlap between an object and a target resulting in a target detection error;

Fig. 2 is a schematic flowchart from image collection to a ternary image in an embodiment of the present invention;

Fig. 3 is a schematic flowchart from a ternary image to lines in an embodiment of the present invention;

Fig. 4(a) and Fig. 4(b) are exemplary diagrams of a pairing process in an embodiment of the present invention;

Fig. 5 is a schematic flowchart of an image processing method for target detection according to an embodiment of the present invention;

Fig. 6(a) is a schematic diagram of a positive edge set of a target obtained by performing image processing on a traffic cone in an example of an embodiment of the present invention, Fig. 6(b) is a schematic diagram of a negative edge set of the target obtained by performing image processing on the traffic cone in the example of the embodiment of the present invention, and Fig. 6(c) is a schematic diagram of a target created after pairing in the example;

Fig. 7 is a schematic flowchart of edge point separation processing in an embodiment of the present invention;

Fig. 8(a) is a schematic diagram of classifying a positive edge set in an example of an embodiment of the present invention, Fig. 8(b) is a schematic diagram of dividing a primary set and a secondary set in the example of the embodiment of the present invention, and Fig. 8(c) is a schematic diagram of a target created after pairing by using the primary set in the example; and

Fig. 9 is a schematic structural diagram of an image processing apparatus for target detection according to an embodiment of the present invention.

**Description of reference numerals**

910, image preprocessing module; 920, edge point separation module; 930, target creating module.

**Detailed Description**

It should be noted that the implementations of the present invention and the features thereof may be combined with each other without conflict.

In addition, a target mentioned in the implementations of the present invention includes a lane line and pedestrians, vehicles, road signs, roadblock devices (such as a traffic cone) and the like positioned within a shooting range of a camera of a front vehicle. In addition, in the embodiments of the present invention, "edge point set", "edge line" and "edge" may be interpreted interchangeably under corresponding scenarios.

The present invention will be described in detail below with reference to the drawings and in conjunction with the implementations.

In order to more clearly describe solutions of the embodiments of the present invention, target detection in autonomous driving is first described herein.

The target detection process of the embodiments of the present invention mainly includes three parts, namely obtaining a ternary image, obtaining edge lines from the ternary image, and performing a pairing process on the basis of the edge lines. These three parts are specifically described below.

(1) Part 1: from image collection to a ternary image

Fig. 2 is a schematic flowchart from image collection to the ternary image in an embodiment of the present invention. As shown in Fig. 2, the flow may include the following steps:

S210, an image is obtained, that is, the image is captured through camera shooting.
S220, a color is selected from red, green and blue.
S230, an analysis region is determined, including a subsampling process.

The analysis region should be sized to cover a target. Moreover, subsampling is performed because a current image has a large number of pixels, exceeding 1 million pixels, and calculation points may be reduced by subsampling. After subsampling, the analysis region may have about $100 \times 250$ pixels.

S240, the image is downscaled/subsampled, which is a result of the analysis region and subsampling.

S250, smoothing, differential processing and peripheral processing are performed on the image. Smoothing is a preprocessing process of differential, and Sobel is used as a differential filter. Peripheral processing is necessary for peripheral pixels because the peripheral pixels become the only pixels in matrix operation, and peripheral processing excludes/processes the peripheral pixels for subsequent calculations.

For example, the following smoothing filter is applied to an image in the analysis region before differential processing is performed:

$$\begin{bmatrix} 1 & 1 & 1 \\ 1 & 1 & 1 \\ 1 & 1 & 1 \end{bmatrix}$$

Then, the following Sobel filter is applied:

$$\begin{bmatrix} -1 & 0 & 1 \\ -2 & 0 & 2 \\ -1 & 0 & 1 \end{bmatrix}.$$

S260, a threshold is set to obtain the ternary image, and thresholds are set for positive/negative differential images respectively.

For example, the image processed in step S250 is truncated by the threshold to form the ternary image:

aaa(m, n) < -*threshold ttt*(m, n) = -1, corresponding to a negative edge of the ternary image
aaa(m, n) > +*threshold ttt*(m, n) = 1, corresponding to a positive edge of the ternary image
others,

$$ttt(m,n) = 0$$

wherein aaa(m, n) and ttt (m, n) are a differential image and the ternary image respectively.

(2) Part 2: from the ternary image to edge lines

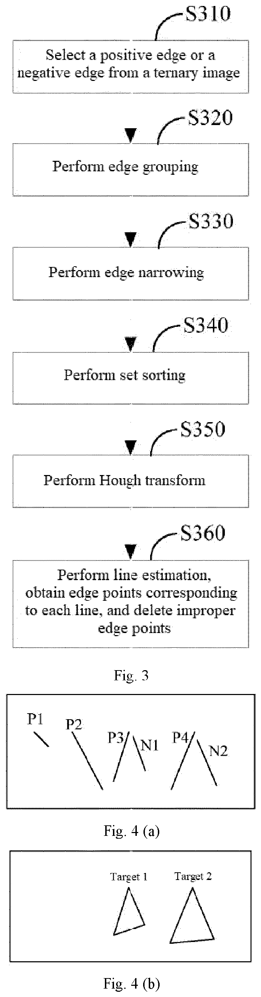

Fig. 3 is a schematic flowchart from the ternary image to the edge lines in the embodiment of the present invention. As shown in Fig. 3, the flow may include the following steps:
Step S310, the positive edge or the negative edge is selected from the ternary image.

In the embodiment of the present invention, whether to select the positive edge or the negative edge is judged according to the connection or overlap between an edge of the target and an edge of an object, and the edge connected or overlapped with the edge of the object is selected.

Step S320, edges grouping is performed.

Step S330, edge narrowing is performed, which is a conventional technique and helps to reduce edge points.

In target detection, the edge of the target should be narrow because a wide edge is not necessary and increases calculations. Therefore, narrowing of the edge is necessary. In the embodiment of the present invention, narrowing of the edge may be performed in a horizontal direction.

Step S340, set sorting is performed.

Sorting is to renumber sets in a way that the quantity of edge points in the sets decreases, which also helps to reduce edge points. For example, sets with a few points may be deleted.

Step S350, Hough transform is performed.

Step S360, line estimation is performed, edge points corresponding to each line are obtained, and improper edge points are deleted to obtain final edge lines.

It is understandable that some of these steps, such as Hough transform, are conventional for lane detection and target detection, and may be understood with reference to the prior art, so the specific implementation details will not be repeated herein.

(3) Part 3: a pairing process

For example, when the target is a traffic cone, the pairing process is to estimate a cone body of the traffic cone based on the edge lines. Figs. 4(a) and 4(b) are exemplary diagrams of the pairing process in the embodiment of the present invention. Positive and negative edge lines as shown in Fig. 4(a) are finally created by line estimation in Part 2, P represents the positive edge line posi, and N represents the negative edge line nega. To create the target, pairing between the positive edge line and the negative edge line is as follows:

$$(posi, nega) = (P1, N1), (P1, N2),$$
$$(P2, N1), (P2, N2),$$
$$(P3, N1), (P3, N2),$$
$$(P4, N1), (P4, N2)$$

That is, eight pairs are created, and each pair may be evaluated by some standards. The following standards may be used in the embodiment of the present invention:

(a) an average height position: < the threshold;
(b) vertical overlaps of two lines: a larger overlap has more points;
(c) the distance of the edge lines: there are more points when the distance is close to 20 [cm]; and
(d) angles of the edge lines: the closer the sum of the angles of the edge lines, the larger corresponding edge points.

In this way, a target 1 (P3, N1) and a target 2 (P4, N2) are obtained in Fig. 4(b) through evaluation. Each of initial sets has 30 edge points, while after matching, the target 1 has 24 edge points, and the target 2 has 27 edge points.

Based on the target detection process, an image processing method for target detection according to an embodiment of the present invention will be described in detail below.

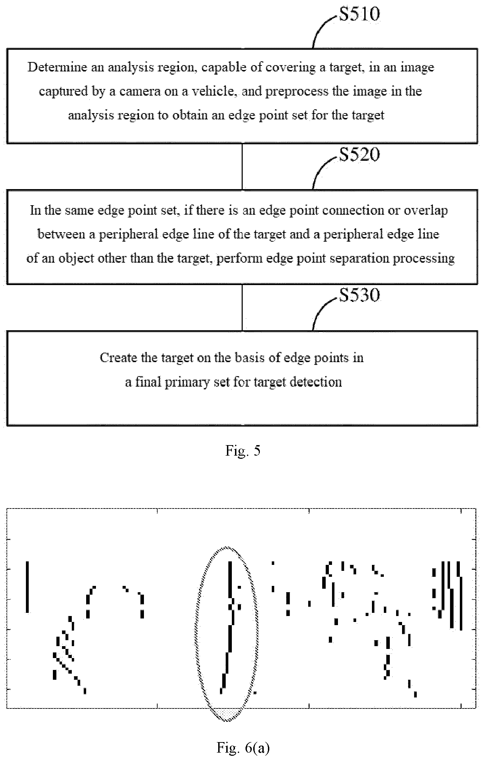

Fig. 5 is a schematic flowchart of the image processing method for target detection according to the embodiment of the present invention. As shown in Fig. 5, the image processing method for target detection in the embodiment of the present invention may include the following steps:
Step S510, an analysis region, capable of covering a target, in an image captured by a camera on a vehicle is determined, and the image is preprocessed in the analysis region to obtain an edge point set for the target.

For example, when the target is a traffic cone, it is assumed that the analysis region is about 1.6×4 [m] because the size of the traffic cone is 0.2-0.3 (diameter)×0.7 (height) [m]. In addition, the preprocessing process may refer to the description about Figs. 2, 3, 4(a) and 4(b).

Step S520, in the same edge point set, if there is an edge point connection or overlap between a peripheral edge line of the target and a peripheral edge line of an object other than the target (the "object other than the target" is collectively referred to as an object hereinafter), edge point separation processing is performed.

In fact, if the peripheral edge line of the object is longer than the peripheral edge line of the target, it may be considered that there is an edge point connection between the target and the object.

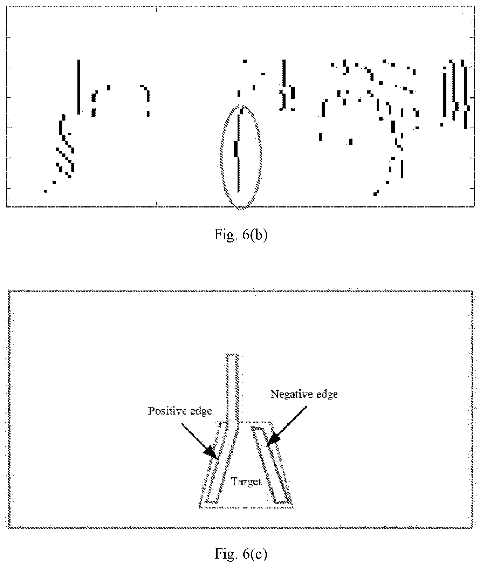

Continuing to take the traffic cone as an example, Fig. 6(a) is a positive edge point set (circled in the figure) of the target obtained by performing image processing on the traffic cone, and Fig. 6(b) is a negative edge point set (circled in the figure) of the target obtained by performing image processing on the traffic cone. Ideally, it is desirable that a peripheral edge of the target and a peripheral edge of the object belong to different edge point sets, but it is unavoidable that they are combined into a single set due to connections or overlaps of the edge lines. As shown in Fig. 6(a), the positive edge point set includes edge points of the object. Thus, based on Figs. 6(a) and 6(b), it is impossible to create an "ideal target" with positive and negative edges. For example, Fig. 6(c) is a target created after pairing, and it may be seen that a positive edge of the target is connected or overlapped with an edge of the object in the background, so the created target is not ideal.

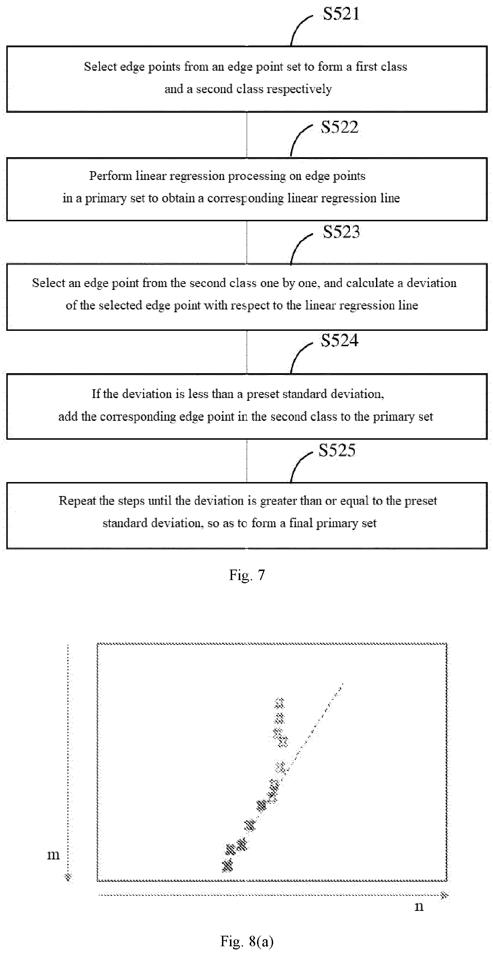

Thus, Fig. 7 is a schematic flowchart of edge point separation processing in an embodiment of the present invention. As shown in Fig. 7, the edge point separation processing may include the following steps: Step S521, edge points are selected from the edge point set to form a first class and a second class respectively.

The first class includes edge points formed as a primary set, the second class includes edge points other than the primary set in the edge point set, and the height of the edge points in the primary set in the image is less than the height of the target. It should be noted that since the edge point set is for the target, and the edge points in the initial first class are all from the edge point set, it may be determined that the initial first class is a subset of the edge point set, or referred to as a subset of the edge of the target.

In a preferable embodiment, the selecting the edge points from the edge point set to form the first class includes: starting from a bottom position of the edge point set, edge points are selected sequentially until reach a set height position in an order of increasing in height to form the first class. The selected edge points need to meet a condition that an initial height is less than the height of the target.

Corresponding to the example of Figs. 6(a)-6(c), the positive edge point set corresponding to Fig. 6(a) is divided into the first class and the second class, as shown in Fig. 8(a), solid cross signs represent the edge points of the peripheral edge line of the target, which are correspondingly the first class, and hollow cross signs represent edge points of the peripheral edge line of the object, which are correspondingly the second class.

The initial height of the first class in the image is a preset proportion of the height of the target. The preset proportion is preferably two thirds to ensure that enough target edge points are selected into the first class.

Step S522, linear regression processing is performed on the edge points in the primary set to obtain a corresponding linear regression line.

Linear regression processing is a conventional mathematical algorithm, so that the linear regression line $n=c_1*m+c_0$ and a standard line $\sigma$ may be obtained, wherein $c_1$ and $c_0$ are coefficients of the linear regression line, n represents a vertical position of the edge points, and m represents a horizontal position of the edge points.

Step S523, an edge point is selected from the second class one by one, and a deviation of the selected edge point with respect to the linear regression line is calculated.

Specifically, corresponding to the linear regression line $n=c_1*m+c_0$ above, a calculation formula is as follows:

$$\Delta n\,(i) = n\,(i) - (m(i) + c_0)$$

wherein n(i) and m(i) are the horizontal position and the vertical position of the edge points in the second class respectively, and i represents the serial number of the edge points in the second class. Preferably, the selecting the edge point from the second class one by one includes: starting from an edge point at the lowest height position in the second class, the edge point is selected one by one for deviation calculation.

In the embodiment of the present invention, when the target and the object are in an up-down position relationship on the image, the first class and the second class may be referred to as a lower class and an upper class or a low class and a high class. For example, i is an edge point at the lowest height position in the upper class, and i+1, i+2, ... are edge points sequentially selected from higher positions.

Step S524, if the deviation is less than a preset standard deviation, the corresponding edge point in the second class is added to the primary set.

Preferably, step S524 may further include: edge points that are not selected and edge points with deviations greater than or equal to the preset standard deviation in the second class are formed as a secondary set; and the secondary set is discarded.

For example, supposing that there are three edge points in the second class that meet the deviation condition, their average value is taken:

$$\Delta N\,(i) = (\Delta n\,(i) + \Delta n\,(i+1) + \Delta n\,(i+2))/\,3$$

The step continues until $\Delta N\,(i) < 1.3\sigma$, wherein the coefficient 1.3 is a set multiple, and $1.3\sigma$ is the preset standard deviation. Edge points meeting $\Delta N\,(i) \geq 1.3\sigma$ enter the secondary set.

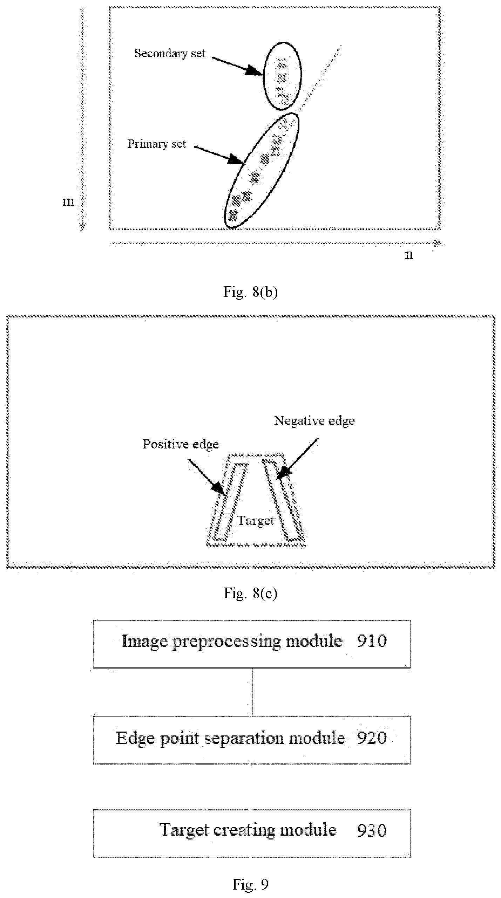

Accordingly, corresponding to the situation of the upper class and the lower class, finally obtained edge point coordinates (m(i), n(i)) may be a desired upper limit edge, edge points below the upper limit edge are the primary set (which may also be understood as a target set), and edge points above the upper limit edge are the secondary set. Corresponding to Fig. 8(a), Fig. 8(b) is a schematic diagram of dividing the primary set and the secondary set. The secondary set generally belongs to background objects and has nothing to do with lane information that needs to be obtained. Therefore, in some cases, the secondary set may be discarded.

Step S525, the steps (S521-S524) are repeated until the deviation is greater than or equal to the preset standard deviation, so as to form a final primary set.

Accordingly, the primary set suitable for creating the target is obtained.

Step S530, the target is created on the basis of the edge points in the final primary set for target detection.

Corresponding to Fig. 8(a) and Fig. 8(b), the target created using the edge points of the finally obtained primary set is as shown in Fig. 8(c). Compared with Fig. 6(c), it is easy to know that the target separates the edge points of the interfering object, so that the finally detected target is more accurate than an actual target.

In addition, those skilled in the art may understand that the first class and the second class in the embodiment of the present invention may be exchanged.

Another embodiment of the present invention further provides a machine-readable storage medium having instructions stored thereon. The instructions are configured to make a machine to execute the above image processing method for target detection. The machine-readable storage medium includes, but is not limited to, a phase change random access memory (PRAM), a static random access memory (SRAM), a dynamic random access memory (DRAM), random access memories (RAMs) of other types, a read-only memory (ROM), an electrically erasable programmable read-only memory (EEPROM), a flash memory or other memory technologies, a compact disk read-only memory (CD-ROM), a digital versatile disc (DVD) or other optical storage, a magnetic cassette tape, tape and disk storage or other magnetic storage devices, and other media that may store program codes.

The machine-readable storage medium may be executed by a processor on a vehicle. The processor may use a vehicle CAN bus and the like to obtain required vehicle information, lane line information, environmental information and the like from an environmental perception part of an ADS and the like to determine whether the vehicle is in a lane keeping state, a vehicle's normal lane changing state, a vehicle's abnormal lane changing state, or the like, and correspondingly execute the instructions stored in the machine-readable storage medium.

The processor may be an electronic control unit (ECU) of the vehicle, or a conventional controller independently configured in a camera, such as a CPU, a single-chip microcomputer, a digital signal processor (DSP), a system on a chip (SOC), etc., and it is understandable that these independent controllers may also be integrated into the ECU. The processor is preferably configured with a controller having a high calculation speed and rich I/O port devices, and is required to have an input and output port that may communicate with an entire vehicle CAN, an input and output port for switching signals, a network cable interface, etc.

Accordingly, the above image processing method for target detection may be integrated into the processor of the vehicle (such as a camera processor) in the form of codes. Through experiments, after using the image processing method of the embodiment of the present invention, edge sets connected or overlapped in an image taken by the camera may be separated well, and the position and structure of a finally detected target are more accurate.

Based on the same inventive concept as the above image processing method for target detection, an embodiment of the present invention further provides an image processing apparatus for target detection. Fig. 9 is a schematic structural diagram of the image processing apparatus for target detection according to the embodiment of the present invention. As shown in Fig 9, the image processing apparatus may include:

an image preprocessing module 910, configured to determine an analysis region, capable of covering a target, in an image captured by a camera on a vehicle, and preprocess the image in the analysis region to obtain an edge point set for the target;
an edge point separation module 920, configured to perform, if there is an edge point connection or overlap between a peripheral edge line of the target and a peripheral edge line of an object other than the target in the same edge point set, the following edge point separation processing: selecting edge points from the edge point set to form a first class and a second class respectively, wherein the first class includes edge points formed as a primary set, the second class includes edge points other than the primary set in the edge point set, and the height of the edge points in the primary set in the image is less than the height of the target; performing linear regression processing on the edge points in the primary set to obtain a corresponding linear regression line; selecting an edge point from the second class one by one, and calculating a deviation of the selected edge point with respect to the linear regression line; adding, if the deviation is less than a preset standard deviation, the selected edge point to the primary set; and repeating the steps until the deviation is greater than or equal to the preset standard deviation, so as to form a final primary set; and
a target creating module 930, configured to create the target on the basis of the edge points in the final primary set for target detection.

In a preferable embodiment, the selecting, by the edge point separation module, the edge points from the edge point set to form the first class includes: starting from a bottom position of the edge point set, edge points are selected sequentially until reach a set height position in an order of increasing in height to form the first class. The selected edge points need to meet a condition that an initial height is less than the height of the target.

In a preferable embodiment, the selecting, by the edge point separation module, the edge point from the second class one by one includes: starting from an edge point at a lowest height position in the second class, the edge point is selected one by one for deviation calculation.

In a preferable embodiment, the edge point separation module is further configured to: form edge points that are not selected and edge points with deviations greater than or equal to the preset standard deviation in the second class as a secondary set; and discard the secondary set.

An embodiment of the present invention further provides a device, including a processor, a memory, and a program stored in the memory and capable of running on the processor. The processor implements the above image processing method when executing the program.

The present application further provides a computer program product adapted to executing, when executed on a vehicle, a program for initializing the steps of the above image processing method. Those skilled in the art will appreciate that the embodiments of the present application can be provided as a method, system, or computer program product. Accordingly, the present application may take the form of an entirely hardware embodiment, an entirely software embodiment or an embodiment combining software and hardware aspects. Moreover, the present application may take the form of a computer program product embodied on one or more computer-usable storage media having computer-usable program codes therein, including, but not limited to, a magnetic disk memory, a CD-ROM, an optical memory and the like.

It should be noted that the implementation details and effects of the image processing apparatus according to the embodiment of the present invention are the same as or similar to those of the embodiment related to the image processing method, and therefore will not be repeated here.

The above are only the preferable embodiments of the present invention which is set out in the appended claims.

**Claims**

1. A computer-implemented image processing method for target detection, comprising:

   determining an analysis region, capable of covering the target, in an image captured by a camera on a vehicle, and preprocessing the image in the analysis region to obtain an edge point set for the target;
   performing, if there is an edge point connection or overlap between a peripheral edge line of the target and a peripheral edge line of an object other than the target in the same edge point set, the following edge point separation processing:

      selecting edge points from the edge point set to form a first class and a second class respectively, wherein the first class comprises edge points formed as a primary set, the second class comprises other edge points other than the primary set in the edge point set, and
      a height of the edge points in the primary set in the image is less than a height of the target; performing linear regression processing on the edge points in the primary set to obtain a corresponding linear regression line;
      selecting an edge point from the second class one by one, and calculating a deviation of the selected edge point with respect to the linear regression line;
      adding, if the deviation is less than a preset standard deviation, the selected edge point to the primary set; and
      repeating above processing until the deviation is greater than or equal to the preset standard deviation, so as to form a final primary set; and

   creating the target on the basis of the edge points in the final primary set for target detection.

2. The image processing method for target detection according to claim 1, **characterized in that** selecting edge points from the edge point set to form the first class comprises:
   selecting, starting from a bottom position of the edge point set, edge points until reach a set height position sequentially in an order of increasing in height to form the first class, wherein the selected edge points need to meet a condition that an initial height is less than the height of the target.

3. The image processing method for target detection according to claim 1, **characterized in that** an initial height of the edge points in the first class in the image is two thirds of the height of the target.

4. The image processing method for target detection according to claim 1, **characterized in that** selecting the edge point from the second class one by one comprises:

selecting, starting from an edge point at a lowest height position in the second class, the edge point one by one for deviation calculation.

5. The image processing method for target detection according to claim 1, **characterized by** further comprising:

forming edge points that are not selected and edge points with deviations greater than or equal to the preset standard deviation in the second class as a secondary set; and discarding the secondary set.

6. An image processing apparatus for target detection, comprising:

an image preprocessing module, configured to determine an analysis region, capable of covering the target, in an image captured by a camera on a vehicle, and preprocess the image in the analysis region to obtain an edge point set for the target;

an edge point separation module, configured to perform, if there is an edge point connection or overlap between a peripheral edge line of the target and a peripheral edge line of an object other than the target in the same edge point set, the following edge point separation processing:

selecting edge points from the edge point set to form a first class and a second class respectively, wherein the first class comprises edge points formed as a primary set, the second class comprises edge points other than the primary set in the edge point set, and a height of the edge points in the primary set in the image is less than a height of the target; performing linear regression processing on the edge points in the primary set to obtain a corresponding linear regression line; selecting an edge point from the second class one by one, and calculating a deviation of the selected edge point with respect to the linear regression line; adding, if the deviation is less than a preset standard deviation, the selected edge point to the primary set; and repeating above processing until the deviation is greater than or equal to the preset standard deviation, so as to form a final primary set; and

a target creating module, configured to create the target on the basis of the edge points in the final primary set for target detection.

7. The image processing apparatus for target detection according to claim 6, **characterized in that** selecting, by the edge point separation module, edge points from the edge point set to form the first class comprises:
selecting, starting from a bottom position of the edge point set, edge points until reach a set height position sequentially in an order of increasing in height to form the first class, wherein the selected edge points need to meet a condition that an initial height is less than the height of the target.

8. The image processing apparatus for target detection according to claim 6, **characterized in that** an initial height of the edge points in the first class in the image is two thirds of the height of the target.

9. The image processing apparatus for target detection according to claim 6, **characterized in that** selecting, by the edge point separation module, the edge point from the second class one by one comprises:
selecting, starting from an edge point at a lowest height position in the second class, the edge point one by one for deviation calculation.

10. The image processing apparatus for target detection according to claim 6, **characterized in that** the edge point separation module is further configured to:

form edge points that are not selected and edge points with deviations greater than or equal to the preset standard deviation in the second class as a secondary set; and discard the secondary set.

11. A machine-readable storage medium having instructions stored thereon, the instructions being configured to make a machine execute the image processing method for target detection according to any one of claims 1 to 5.

12. A processor configured to execute the instructions stored in the machine-readable storage medium according to claim 11.

**Patentansprüche**

1. Bildverarbeitungsverfahren zur Zielerkennung, **dadurch gekennzeichnet, dass** das Verfahren umfasst:

Bestimmen eines Analysebereichs, der in der Lage ist, das Ziel in einem von einer Kamera an einem Fahrzeug aufgenommenen Bild abzudecken, und
Vorverarbeiten des Bildes in dem Analysebereich, um einen Kantenpunktsatz für das Ziel zu erhalten;

Durchführen, wenn es eine Kantenpunktverbindung oder Überlappung zwischen einer peripheren Kantenlinie des Ziels und einer peripheren Kantenlinie eines anderen Objekts als dem Ziel im selben Kantenpunktsatz gibt, der folgenden Kantenpunkttrennungsverarbeitung:

Auswählen von Kantenpunkten aus dem Kantenpunktsatz, um eine erste Klasse bzw. eine zweite Klasse zu bilden, wobei die erste Klasse Kantenpunkte umfasst, die als primärer Satz gebildet werden, die zweite Klasse andere Kantenpunkte als der primäre Satz in dem Kantenpunktsatz umfasst und eine Höhe der Kantenpunkte in dem primären Satz in dem Bild kleiner als eine Höhe des Ziels ist;

Durchführen der Verarbeitung mit linearer Regression an den Kantenpunkten im primären Satz, um eine entsprechende lineare Regressionslinie zu erhalten;

einzelnes Auswählen eines Kantenpunktes aus der zweiten Klasse und Berechnen einer Abweichung des ausgewählten Kantenpunktes in Bezug auf die lineare Regressionslinie;

Hinzufügen des ausgewählten Kantenpunktes zum primären Satz, wenn die Abweichung kleiner als eine voreingestellte Standardabweichung ist; und Wiederholen der obigen Verarbeitung, bis die Abweichung größer oder gleich der voreingestellten Standardabweichung ist, um so einen endgültigen primären Satz zu bilden; und Erstellen des Ziels auf der Grundlage der Kantenpunkte in dem endgültigen primären Satz für die Zielerkennung.

2. Bildverarbeitungsverfahren zur Zielerkennung nach Anspruch 1, **dadurch gekennzeichnet, dass** das Auswählen von Kantenpunkten aus dem Kantenpunktsatz zur Bildung der ersten Klasse umfasst:
Auswählen von Kantenpunkten, ausgehend von einer unteren Position des Kantenpunktsatzes, bis zum Erreichen einer eingestellten Höhenposition nacheinander in einer Reihenfolge zunehmender Höhe, um die erste Klasse zu bilden, wobei die ausgewählten Kantenpunkte eine Bedingung erfüllen müssen, dass eine Anfangshöhe geringer ist als die Höhe des Ziels.

3. Bildverarbeitungsverfahren zur Zielerkennung nach Anspruch 1, **dadurch gekennzeichnet, dass** eine Anfangshöhe der Kantenpunkte in der ersten Klasse im Bild zwei Drittel der Höhe des Ziels beträgt.

4. Bildverarbeitungsverfahren zur Zielerkennung nach Anspruch 1, **dadurch gekennzeichnet, dass** das einzelne Auswählen des Kantenpunktes aus der zweiten Klasse umfasst:
einzelnes Auswählen, ausgehend von einem Kantenpunkt an einer kleinsten Höhenposition in der zweiten Klasse, des Kantenpunktes für die Abweichungsberechnung.

5. Bildverarbeitungsverfahren zur Zielerkennung nach Anspruch 1, **dadurch gekennzeichnet, dass** das Verfahren ferner umfasst:

Bilden von Kantenpunkten, die nicht ausgewählt sind, und von Kantenpunkten mit Abweichungen, die größer oder gleich der voreingestellten Standardabweichung sind, in der zweiten Klasse als sekundären Satz; und
Verwerfen des sekundären Satzes.

6. Bildverarbeitungsvorrichtung zur Zielerkennung, **dadurch gekennzeichnet, dass** das Verfahren umfasst:

ein Bildvorverarbeitungsmodul, das dazu ausgebildet ist, einen Analysebereich zu bestimmen, der in der Lage ist, das Ziel in einem von einer Kamera an einem Fahrzeug aufgenommenen Bild abzudecken, und das Bild in dem Analysebereich vorzuverarbeiten, um einen Kantenpunktsatz für das Ziel zu erhalten;
ein Kantenpunkttrennungsmodul, das dazu ausgebildet ist, wenn es eine Kantenpunktverbindung oder Überlappung zwischen einer peripheren Kantenlinie des Ziels und einer peripheren Kantenlinie eines anderen Objekts als dem Ziel im selben Kantenpunktsatz gibt, die folgende Kantenpunkttrennungsverarbeitung durchzuführen:

Auswählen von Kantenpunkten aus dem Kantenpunktsatz, um eine erste Klasse bzw. eine zweite Klasse zu bilden, wobei die erste Klasse Kantenpunkte umfasst, die als primärer Satz gebildet werden, die zweite Klasse andere Kantenpunkte als der primäre Satz in dem Kantenpunktsatz umfasst und eine Höhe der Kantenpunkte in dem primären Satz in dem Bild kleiner als eine Höhe des Ziels ist;

Durchführen der Verarbeitung mit linearer Regression an den Kantenpunkten im primären Satz, um eine entsprechende lineare Regressionslinie zu erhalten;

einzelnes Auswählen eines Kantenpunktes aus der zweiten Klasse und Berechnen einer Abweichung des ausgewählten Kantenpunktes in Bezug auf die lineare Regressionslinie;

Hinzufügen des ausgewählten Kantenpunktes zum primären Satz, wenn die Abweichung kleiner als eine voreingestellte Standardabweichung ist; und Wiederholen der obigen Verarbeitung, bis die Abweichung größer oder gleich der voreingestellten Standardabweichung ist, um so einen endgültigen primären Satz zu bilden; und ein Zielerstellungsmodul, das dazu ausgebildet ist, das Ziel auf der Grundlage der Kantenpunkte in dem endgültigen primären Satz für die Zielerkennung zu erstellen.

7. Bildverarbeitungsvorrichtung zur Zielerkennung nach Anspruch 6, **dadurch gekennzeichnet, dass** das Auswählen, mittels des Kantenpunkttrennungsmoduls, von Kantenpunkten aus dem Kantenpunktsatz zur Bildung der ersten Klasse umfasst: Auswählen von Kantenpunkten, ausgehend von einer unteren Position des Kantenpunktsatzes, bis zum Erreichen einer eingestellten Höhenposition nacheinander in einer Reihenfolge zunehmender Höhe, um die erste Klasse zu bilden, wobei die ausgewählten Kantenpunkte eine Bedingung erfüllen müssen, dass eine Anfangshöhe geringer ist als die Höhe des Ziels.

8. Bildverarbeitungsvorrichtung zur Zielerkennung nach Anspruch 6, **dadurch gekennzeichnet, dass** eine Anfangshöhe der Kantenpunkte in der ersten Klasse im Bild zwei Drittel der Höhe des Ziels beträgt.

9. Bildverarbeitungsvorrichtung zur Zielerkennung nach Anspruch 6, **dadurch gekennzeichnet, dass** das einzelne Auswählen, mittels des Kantenpunkttrennungsmoduls, des Kantenpunktes aus der zweiten Klasse umfasst: einzelnes Auswählen, ausgehend von einem Kantenpunkt an einer kleinsten Höhenposition in der zweiten Klasse, des Kantenpunktes für die Abweichungsberechnung.

10. Bildverarbeitungsvorrichtung zur Zielerkennung nach Anspruch 6, **dadurch gekennzeichnet, dass** das Kantenpunkttrennungsmodul ferner für Folgendes ausgebildet ist:

Bilden von Kantenpunkten, die nicht ausgewählt sind, und von Kantenpunkten mit Abweichungen, die größer oder gleich der voreingestellten Standardabweichung sind, in der zweiten Klasse als sekundären Satz; und Verwerfen des sekundären Satzes.

11. Maschinenlesbares Speichermedium mit darauf gespeicherten Anweisungen, wobei die Anweisungen so konfiguriert sind, dass eine Maschine zum Ausführen des Bildverarbeitungsverfahrens zur Zielerkennung nach einem der Ansprüche 1 bis 5 veranlasst wird.

12. Prozessor, der so ausgebildet ist, dass er die in dem maschinenlesbaren Speichermedium gespeicherten Anweisungen gemäß Anspruch 11 ausführt.

**Revendications**

1. Procédé de traitement d'image, mis en œuvre par ordinateur, de détection de cible, comprenant les étapes consistant à :

déterminer une région d'analyse, permettant de couvrir la cible, dans une image capturée par une caméra d'un véhicule, et prétraiter l'image dans la région d'analyse pour obtenir un ensemble de points de contour de la cible ; exécuter, en présence d'une liaison entre points de contour ou d'un chevauchement entre une ligne de contour périphérique de la cible et une ligne de contour périphérique d'un objet autre que la cible dans le même ensemble de points de contour, le traitement de séparation de points de contour suivant consistant à :

sélectionner des points de contour dans l'ensemble de points de contour pour former respectivement une première classe et une seconde classe, dans lequel la première classe comprend des points de contour formés en tant qu'ensemble primaire, la seconde classe comprend d'autres points de contour autres que ceux de l'ensemble primaire de l'ensemble de points de contour, et une hauteur des points de contour de l'ensemble primaire dans l'image est inférieure à une hauteur de la cible ; appliquer un traitement de régression linéaire aux points de contour de l'ensemble primaire pour obtenir une droite de régression linéaire correspondante ; sélectionner, un par un, un point de contour dans la seconde classe, et calculer un écart du point de contour sélectionné par rapport à la droite de régression linéaire ; ajouter, si l'écart est inférieur à un écart type prédéfini, le point de contour sélectionné à l'ensemble primaire ; et répéter le traitement susmentionné jusqu'à ce que l'écart soit supérieur ou égal à l'écart type prédéfini, de façon à former un ensemble primaire final ; et

créer la cible sur la base des points de contour de l'ensemble primaire final à des fins de détection de cible.

**2.** Procédé de traitement d'image de détection de cible selon la revendication 1, **caractérisé en ce que** l'étape de sélection de points de contour dans l'ensemble de points de contour pour former la première classe consiste à :

sélectionner, en commençant à partir d'une position inférieure de l'ensemble de points de contour, des points de contour jusqu'à atteindre une position de hauteur définie successivement dans un ordre allant en augmentant du point de vue de la hauteur pour former la première classe, dans lequel il est nécessaire que les points de contour sélectionnés satisfassent une condition telle qu'une hauteur initiale soit inférieure à la hauteur de la cible.

**3.** Procédé de traitement d'image de détection de cible selon la revendication 1, **caractérisé en ce qu'**une hauteur initiale des points de contour de la première classe dans l'image fait les deux tiers de la hauteur de la cible.

**4.** Procédé de traitement d'image de détection de cible selon la revendication 1, **caractérisé en ce que** l'étape de sélection, un par un, du point de contour dans la seconde classe consiste à :

sélectionner, un par un, en commençant à partir d'un point de contour situé à une position de hauteur la plus basse dans la seconde classe, le point de contour à des fins de calcul d'écart.

**5.** Procédé de traitement d'image de détection de cible selon la revendication 1, **caractérisé en ce qu'**il comprend en outre les étapes consistant à :

former des points de contour qui n'ont pas été sélectionnés et des points de contour présentant des écarts supérieurs ou égaux à l'écart type prédéfini dans la seconde classe en tant qu'ensemble secondaire ; et
supprimer l'ensemble secondaire.

**6.** Appareil de traitement d'image de détection de cible, comprenant :

un module de prétraitement d'image, configuré pour déterminer une région d'analyse, permettant de couvrir la cible, dans une image capturée par une caméra d'un véhicule, et prétraiter l'image dans la région d'analyse pour obtenir un ensemble de points de contour de la cible ;
un module de séparation de points de contour, configuré pour exécuter, en présence d'une liaison entre points de contour ou d'un chevauchement entre une ligne de contour périphérique de la cible et une ligne de contour périphérique d'un objet autre que la cible dans le même ensemble de points de contour, le traitement de séparation de points de contour suivant consistant à :

sélectionner des points de contour dans l'ensemble de points de contour pour former respectivement une première classe et une seconde classe, dans lequel la première classe comprend des points de contour formés en tant qu'ensemble primaire, la seconde classe comprend des points de contour autres que ceux de l'ensemble primaire de l'ensemble de points de contour, et une hauteur des points de contour de l'ensemble primaire dans l'image est inférieure à une hauteur de la cible ;
appliquer un traitement de régression linéaire aux points de contour de l'ensemble primaire pour obtenir une droite de régression linéaire correspondante ;
sélectionner, un par un, un point de contour dans la seconde classe, et calculer un écart du point de contour sélectionné par rapport à la droite de régression linéaire ;
ajouter, si l'écart est inférieur à un écart type prédéfini, le point de contour sélectionné à l'ensemble primaire ; et
répéter le traitement susmentionné jusqu'à ce que l'écart soit supérieur ou égal à l'écart type prédéfini, de façon à former un ensemble primaire final ; et

un module de création de cible, configuré pour créer la cible sur la base des points de contour de l'ensemble primaire final à des fins de détection de cible.

**7.** Appareil de traitement d'image de détection de cible selon la revendication 6, **caractérisé en ce que** la sélection, par le module de séparation de points de contour, de points de contour dans l'ensemble de points de contour pour former la première classe consiste à :

sélectionner successivement, en commençant à partir d'une position inférieure de l'ensemble de points de contour, des points de contour jusqu'à atteindre une position de hauteur définie dans un ordre allant en augmentant de hauteur pour former la première classe, dans lequel il est nécessaire que les points de contour sélectionnés satisfassent une condition telle qu'une hauteur initiale soit inférieure à la hauteur de la cible.

**8.** Appareil de traitement d'image de détection de cible selon la revendication 6, **caractérisé en ce qu'**une hauteur initiale des points de contour de la première classe dans l'image fait les deux tiers de la hauteur de la cible.

**9.** Appareil de traitement d'image de détection de cible selon la revendication 6, **caractérisé en ce que** la sélection, un par un, par le module de séparation de points de contour, du point de contour dans la seconde classe consiste à :
sélectionner, un par un, en commençant à partir d'un point de contour situé à une position de hauteur la plus élevée dans la seconde classe, le point de contour à des fins de calcul d'écart.

**10.** Appareil de traitement d'image de détection de cible selon la revendication 6, **caractérisé en ce que** le module de séparation de points de contour est en outre configuré pour :

former des points de contour qui n'ont pas été sélectionnés et des points de contour présentant des écarts supérieurs ou égaux à l'écart type prédéfini dans la seconde classe en tant qu'ensemble secondaire ; et
supprimer l'ensemble secondaire.

**11.** Support d'informations lisible par machine comportant des instructions maintenues en son sein, les instructions étant configurées pour amener une machine à exécuter le procédé de traitement d'image de détection de cible selon l'une quelconque des revendications 1 à 5.

**12.** Processeur configuré pour exécuter les instructions maintenues dans le support d'informations lisible par machine selon la revendication 11.

Object

B

Target A

Fig. 1

S210

Obtain an image

S220

Select a color

S230

Determine an analysis region

S240

Downscale or subsample
the image

S250

Perform smoothing, differential and
peripheral processing on the image

S260

Set a threshold to obtain
a ternary image

Fig. 2

S310

Select a positive edge or a
negative edge from a ternary image

S320

Perform edge grouping

S330

Perform edge narrowing

S340

Perform set sorting

S350

Perform Hough transform

S360

Perform line estimation,
obtain edge points corresponding
to each line, and delete improper
edge points

Fig. 3

P1  P2  P3  N1  P4  N2

Fig. 4 (a)

Target 1    Target 2

Fig. 4 (b)

S510

Determine an analysis region, capable of covering a target, in an image captured by a camera on a vehicle, and preprocess the image in the analysis region to obtain an edge point set for the target

S520

In the same edge point set, if there is an edge point connection or overlap between a peripheral edge line of the target and a peripheral edge line of an object other than the target, perform edge point separation processing

S530

Create the target on the basis of edge points in a final primary set for target detection

Fig. 5

Fig. 6(a)

Fig. 6(b)

Fig. 6(c)

S521

Select edge points from an edge point set to form a first class
and a second class respectively

S522

Perform linear regression processing on edge points
in a primary set to obtain a corresponding linear regression line

S523

Select an edge point from the second class one by one, and calculate a deviation
of the selected edge point with respect to the linear regression line

S524

If the deviation is less than a preset standard deviation,
add the corresponding edge point in the second class to the primary set

S525

Repeat the steps until the deviation is greater than or equal to the preset
standard deviation, so as to form a final primary set

Fig. 7

m

n

Fig. 8(a)

Fig. 8(b)

Fig. 8(c)

Image preprocessing module   910

Edge point separation module   920

Target creating module   930

Fig. 9

**EP 3 979 196 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Real-time traffic cone detection for autonomous vehicle. **YONG HUANG et al.** 34TH CHINESE CONTROL CONFERENCE (CCC). TECHNICAL COMMITTEE ON CONTROL THEORY, CHINESE ASSOCIATION OF AUTOMATION, 28 July 2015, 3718-3722